Europäisches Patentamt

European Patent Office

Office européen des brevets

(11) Veröffentlichungsnummer: **0 256 436 B1**

# (12) EUROPÄISCHE PATENTSCHRIFT

(45) Veröffentlichungstag der Patentschrift: **01.04.92**

(21) Anmeldenummer: **87111351.0**

(22) Anmeldetag: **05.08.87**

(51) Int. Cl.⁵: **A61B 17/22**, G01H 3/00

(54) **Vorrichtung zum Zertrümmern von Konkrementen.**

(30) Priorität: **18.08.86 DE 8622104 U**

(43) Veröffentlichungstag der Anmeldung:
**24.02.88 Patentblatt 88/08**

(45) Bekanntmachung des Hinweises auf die
Patenterteilung:
**01.04.92 Patentblatt 92/14**

(84) Benannte Vertragsstaaten:
**DE FR GB NL**

(56) Entgegenhaltungen:
**EP-A- 0 211 680**
**DE-A- 3 220 751**

**ULTRASONICS, April 1967, Seiten 105-112;
P.P. LELE: "Production of deep focal lesions
by focused ultrasound - current status"**

**ULTRASONICS, Band 22, Nr. 6, November
1984, Seiten 285-286, Butterworth & Co. Ltd,
Guildford, GB; B. BREYER et al.: "A simple
device for checking the acoustic beam of
ultrasonic therapy equipment"**

(73) Patentinhaber: **SIEMENS AKTIENGESELL-
SCHAFT**
**Wittelsbacherplatz 2**
**W-8000 München 2(DE)**

(72) Erfinder: **Rattner, Manfred**
**Am Eichengarten 8**
**W-8521 Buckenhof(DE)**
Erfinder: **Noske, Erich**
**Ruhsteinweg 12**
**W-8525 Weiher(DE)**

**Beschreibung**

Die Erfindung betrifft eine Vorrichtung zum berührungslosen Zertrümmern von Konkrementen im Körper eines Patienten mit Mitteln zur Aussenden fokussierter Stoßwellen und mit einem flüssigkeitsgefüllten Stoßwellenrohr, das auf seiner Applikationsseite von einer über den Flüssigkeitsdruck an den Patienten drückbaren flexiblen Membran abgeschlossen ist.

Eine Vorrichtung dieser Art wird z.B. zur Zertrümmerung von Nierensteinen verwendet. Mit Hilfe einer Röntgeneinrichtung kann die räumliche Lage eines Nierensteines geortet und die Stoßwellenquelle dann so auf diesen Nierenstein ausgerichtet werden, daß ihr Fokus im Nierenstein liegt. Durch Erzeugung einer Vielzahl von Stoßwellen zerfällt der Nierenstein und geht auf natürlichem Wege ab.

Für eine wirkungsvolle Steinzertrümmerung ist es erforderlich, daß der Fokusbereich der Stoßwellenquelle etwa im Zentrum des Steines liegt. Hierzu ist es außer einer exakten Ortung des Steines auch erforderlich, die Lage des Fokusbereiches der Stoßwellenquelle genau zu kennen. In der Praxis bedeutet dies, daß der Fokusbereich an einer vorgegebenen räumlichen Stelle vor der Stoßwellenquelle liegen muß.

Der Erfindung liegt die Aufgabe zugrunde, eine Vorrichtung der eingangs genannten Art so auszubilden, daß die Lage des Fokusbereiches in einfacher Weise kontrolliert werden kann.

Diese Aufgabe ist erfindungsgemäß dadurch gelöst, daß an der Applikationsseite des Stoßwellenrohres eine Prüfkörper-Halterung lösbar angebracht ist, an der ein durch Stoßwelleneinwirkung beschädigbarer Prüfkörper im vorgesehenen Fokusbereich gehalten ist. Bei der erfindungsgemäßen Vorrichtung ist über der Membran eine Prüfkörper-Halterung anbringbar, die eine Aufnahme für einen Prüfkörper aufweist, welche so angeordnet ist, daß der Prüfkörper im vorgesehenen Fokusbereich der Stoßwellenquelle liegt. Wird ein Prüfkörper in die Aufnahme eingeschoben und ein Probeschuß gemacht, so kann anhand der Beschädigung des Prüfkörpers festgestellt werden, ob die tatsächliche Lage des Fokusbereiches mit der vorgesehenen Fokuslage übereinstimmt.

Die Erfindung ist nachfolgend anhand eines in der Zeichnung dargestellten Ausführungsbeispieles dargestellt. Es Zeigen:

Fig. 1        eine Vorrichtung nach der Erfindung, und

Fig. 2 und 3     zwei Ansichten eines bei der Vorrichtung gemäß Figur 1 anwendbaren Prüfkörpers.

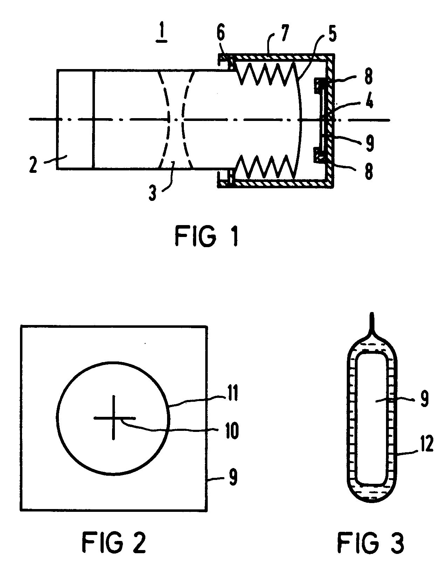

In der Figur 1 ist ein Stoßwellenrohr 1 dargestellt, das an seinem einen Ende einen Stoßwellengenerator 2 und in seinem Innern eine akustische Linse 3 zum Bündeln der vom Stoßwellengenerator 2 ausgesandten Stoßwellen auf einen Fokusbereich 4 aufweist. Das Stoßwellenrohr 1 ist mit einer Flüssigkeit, z.B. Wasser, als Koppelmedium gefüllt und auf seiner Applikationsseite von einer über den Flüssigkeitsdruck an den Patienten andrückbaren flexiblen Membran 5 abgeschlossen.

Zur Überprüfung, ob die tatsächliche Lage des Fokusbereiches mit der vorgesehenen Lage übereinstimmt, weist das Stoßwellenrohr 1 an seiner Applikationsseite eine Befestigungsvorrichtung 6 zum lösbaren Verbinden einer Prüfkörper-Halterung 7 mit dem Stoßwellenrohr 1 auf. Die Befestigungsvorrichtung 6 kann nach Art eines Bajonett-Verschlusses ausgebildet sein. Die Halterung 7 weist eine von zwei Schienen gebildete Aufnahme 8 für einen plattenförmigen Prüfkörper 9 auf. Die geometrischen Abmessungen der Halterung 7 und die Lage der Aufnahme 8 sind so gewählt, daß eine auf dem Prüfkörper vorgesehene Markierung, die in der Figur 2 als Kreuz 10 gezeichnet ist, genau im vorgesehenen Fokusbereich liegt. Wird bei angebauter Halterung 7 und in der Aufnahme 8 liegendem Prüfkörper 9 eine Stoßwelle ausgelöst, so führt diese zu einer Beschädigung des Prüfkörpers 9. Anhand der Lage dieser Beschädigung in bezug auf die Markierung auf dem Prüfkörper 9 kann die tatsächliche Lage des Fokusbereiches bestimmt werden und gegebenenfalls eine Korrektur erfolgen.

Der plattenförmige Prüfkörper gemäß Figur 2 weist ein Kreuz 10 als Markierung auf, das von einem Kreis 11 umgeben ist. Liegt die bei der Erzeugung einer Stoßwelle hervorgerufene Beschädigung innerhalb des Kreises 11, so kann davon ausgegangen werden, daß die tatsächliche Lage des Fokusbereiches innerhalb der zulässigen Toleranz liegt. Ergibt sich eine Beschädigung außerhalb des Kreises 11, so muß eine Korrektur erfolgen.

Der Prüfkörper 9 besteht aus einem Material, das durch die durch den Stoßwellengenerator 2 erzeugten Stoßwellen zertrümmerbar ist, z.B. aus Keramik oder Gips.

Gemäß Figur 3 liegt der Prüfkörper 9 in einer Folienpackung 12, die aus einer verschweißten Folie aus thermoplastischem Material besteht. Die Packung 12 ist mit Wasser als Koppelmedium gefüllt. Es ist aber auch möglich, einen plattenförmigen Prüfkörper ohne weitere Verpackung, wie er in der Figur 2 dargestellt ist, zu verwenden.

Der Prüfkörper 9 erlaubt auch eine Feststellung der Lage des Fokusbereiches in Richtung der Achse des Stoßwellenrohres 1. Dies ist aufgrund der Lage der durch die Stoßwellen erzeugten Abtragung auf dem Prüfkörper 9 (Vorder- oder Rückseite) möglich.

**Patentansprüche**

**1.** Vorrichtung zum berührungslosen Zertrümmern von Konkrementen im Körper eines Patienten mit Mitteln (2, 3) zum Aussenden fokussierter Stoßwellen und mit einem flüssigkeitsgefüllten Stoßwellenrohr (1), das auf seiner Applikationsseite von einer über den Flüssigkeitsdruck an den Patienten drückbaren, flexiblen Membran (5) abgeschlossen ist, **dadurch gekennzeichnet,** daß an der Applikationsseite des Stoßwellenrohres (1) eine Prüfkörper-Halterung (7) lösbar angebracht ist, an der ein durch Stoßwelleneinwirkung beschädigbarer Prüfkörper (9) im vorgesehenen Fokusbereich Gehalten ist.

**2.** Vorrichtung nach Anspruch 1, **dadurch gekennzeichnet,** daß der Prüfkörper (9) plattenförmig ausgebildet und in eine Aufnahme (8) an der Halterung (7) einschiebbar ist.

**3.** Vorrichtung nach Anspruch 2, **dadurch gekennzeichnet,** daß der Prüfkörper (9) in einer Folienpackung (12) liegt, die mit einer Koppelflüssigkeit gefüllt ist.

**4.** Vorrichtung nach einem der Ansprüche 1 bis 3, **dadurch gekennzeichnet,** daß der Prüfkörper (9) aus keramischem Material oder Gips besteht.

**5.** Vorrichtung nach einem der Ansprüche 1 bis 4, **dadurch gekennzeichnet,** daß der Prüfkörper (9) mit Markierungen (10, 11) für den Fokusbereich versehen ist.

**Claims**

**1.** Device for the non-contact disintegration of concretions in the body of a patient, having means (2, 3) for emitting focussed shock waves and having a fluid-filled shock wave tube (1) which is sealed on its application side by a flexible diaphragm (5) which can be pressed against the patient by means of the fluid pressure, characterised in that on the application side of the shock wave tube (1) there is releasably attached a test body mount (7) on which a test body (9), which can be damaged by the effect of shock waves, is held in the predetermined focal region.

**2.** Device according to claim 1, characterised in that the test body (9) is of plate construction and can be pushed into a receiving means (8) on the mount (7).

**3.** Device according to claim 2, characterised in that the test body (9) lies in a foil package (12) filled with a coupling fluid.

**4.** Device according to one of claims 1 to 3, characterised in that the test body (9) is made of ceramic material or plaster.

**5.** Device according to one of claims 1 to 4, characterised in that the test body (9) is provided with markings (10, 11) for the focal region.

**Revendications**

**1.** Dispositif de fragmentation sans contact de concrétions se situant dans le corps d'un patient, comprenant des moyens (2,3) d'émission d'ondes de choc focalisées et un tube d'onde de choc (1) empli d'un liquide, qui est fermé sur son côté d'application par une membrane (5) souple pouvant être appliquée au patient par la pression du liquide, caractérisé en ce que, du côté d'application du tube d'onde de choc (1), est montée amovible une pièce de fixation (7) pour une éprouvette, sur laquelle une éprouvette (9), susceptible d'être endommagée par l'action de l'onde de choc, est maintenue dans la région prévue pour le foyer.

**2.** Dispositif selon la revendication 1, caractérisé en ce que l'éprouvette (9) est constituée sous la forme d'une plaquette et peut être insérée dans un logement (8) de la pièce de fixation (7).

**3.** Dispositif selon la revendication 2, caractérisé en ce que l'éprouvette (9) se trouve dans un emballage (12) en feuille, qui est empli d'un liquide de couplage.

**4.** Dispositif selon l'une des revendications 2 à 3, caractérisé en ce que l'éprouvette (9) est en matière céramique ou en plâtre.

**5.** Dispositif selon l'une des revendications 1 à 4, caractérisé en ce que l'éprouvette (9) est munie de repères (10,11) pour la région du foyer.

FIG 1

FIG 2

FIG 3